# FASCICULE DE BREVET EUROPEEN

(11) **EP 0 656 133 B1**
(45) Date de publication et mention de la délivrance du brevet: **19.08.1998**
(21) Numéro de dépôt: 94919740.4
(22) Date de dépôt: 21.06.1994
(51) Int. Cl.: G05D 16/06, B63C 11/18

(54) **REGULATEUR DE PRESSION DE GAZ**
SERVODRUCKREGLER
GAS PRESSURE CONTROLLER

(30) Priorité: 23.06.1993 FR 9307614
(43) Date de publication de la demande: 07.06.1995
(73) Titulaire: LA SPIROTECHNIQUE INDUSTRIELLE ET COMMERCIALE, F-06517 Carros Cédex (FR)
(72) Inventeur: CHAMBONNET, Bernard, Les Vessanes F-06140 Vence (FR)
(74) Mandataire: Le Moenner, Gabriel
(86) Numéro de dépôt international: FR9400745
(87) Numéro de publication internationale: WO9500893

(56) Documents cités:
- EP-A- 0 531 195
- FR-A- 2 426 289
- GB-A- 2 040 171
- US-A- 4 396 032
- US-A- 5 097 860

## Description

La présente invention concerne les régulateurs de pression de gaz, notamment de gaz respiratoire pour plongeurs, du type comprenant, dans un corps de régulateur, une première chambre communiquant avec une entrée connectable à une source de gaz sous pression, une deuxième chambre séparée de la première chambre par une paroi traversée par un passage et fermée par un moyen de piston solidaire d'une tige creuse coulissant de façon étanche dans le passage et comportant une extrémité s'étendant dans la première chambre et formant élément de clapet coopérant avec un siège de clapet disposé dans la première chambre, le piston étant sollicité dans la direction opposée au siège de clapet par un ressort disposé dans la deuxième chambre et prenant appui sur la paroi, une troisième chambre séparée de la deuxième chambre par le moyen de piston et communiquant avec au moins une sortie connectable à un circuit utilisateur et avec la tige creuse, et une quatrième chambre débouchant vers l'extérieur du corps, délimitée extérieurement par une paroi souple et communiquant avec la deuxième chambre, les deuxième et quatrième chambres étant remplies d'un fluide sensiblement incompressible.

Un régulateur à réservoir de fluide et à membrane de ce type est connu du document US-A-4.396.032. L'agencement décrit dans ce document nécessite un volume important de fluide incompressible et ne permet pas un changement aisé du siège de clapet, ce changement imposant une vidange puis un nouveau remplissage du fluide incompressible.

Il a également été proposé des régulateurs utilisant, en place et lieu de la paroi souple, une paroi poreuse, cette dernière approche présentant toutefois des risques de fuite du fluide et en particulier pour les plongées en eau froide, des inconvénients de pénétration de l'eau dans la réserve de fluide et, partant, des risques de grippage des pièces mobiles du régulateur et de colmatage de la paroi poreuse par des cristaux de glace.

La présente invention a pour objet de proposer des perfectionnements aux régulateurs à paroi souple définis ci-dessus, facilitant grandement la maintenance, permettant de réaliser le régulateur sous une forme compacte avec une faible réserve de fluide incompressible et conférant une sécurité et une fiabilité de fonctionnement accrues.

Pour ce faire, selon une caractéristique de l'invention, le siège de clapet est porté par un élément obturateur délimitant extérieurement la première chambre et monté dans une extrémité du corps, et en ce que la quatrième chambre est formée dans une zone latérale du corps, avantageusement sensiblement en regard de l'entrée de gaz sous pression.

Selon d'autres caractéristiques de l'invention :
- la quatrième chambre communique avec la deuxième chambre par une ouverture formée dans la paroi séparant cette dernière de la première chambre et qui est avantageusement formée d'une seule pièce avec le corps ;
- la tige creuse coopère avec un joint maintenu dans la paroi par une bague sollicitée par un ressort s'étendant dans la première chambre et prenant appui sur le siège de clapet ;
- le moyen de piston comprend un piston et une membrane délimitant intérieurement la troisième chambre.

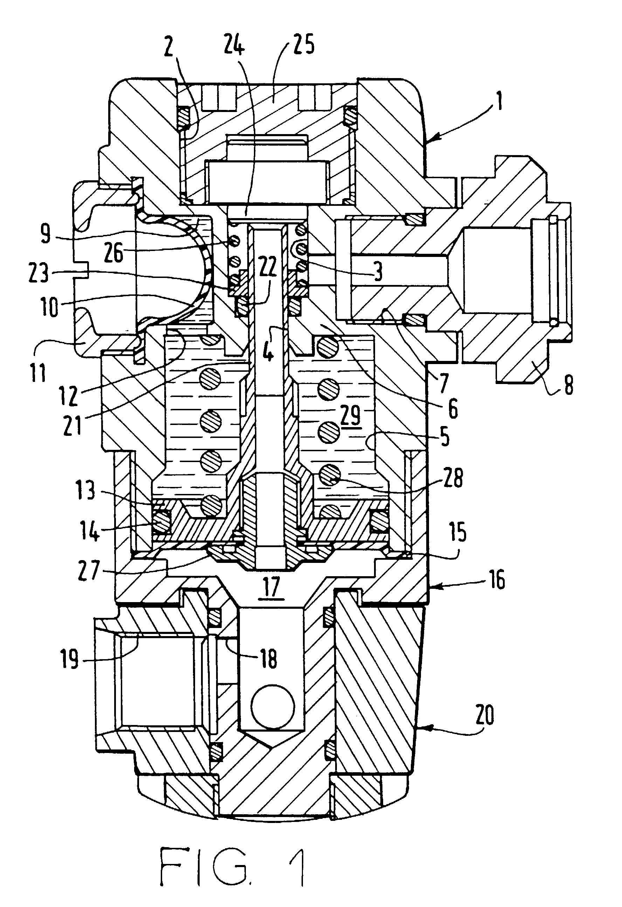

D'autres caractéristiques et avantages de la présente invention ressortiront de la description suivante, donnée à titre illustratif mais nullement limitatif, faite en relation avec le dessin annexé, sur lequel la figure unique est une vue en coupe d'un mode de réalisation d'un régulateur selon l'invention.

Le régulateur, également appelé détendeur dans les pays francophones, comprend un corps 1 de configuration générale cylindrique comportant, de haut en bas sur la figure et coaxialement à l'axe du corps, un alésage supérieur taraudé 2 prolongé par un alésage de diamètre réduit 3, lui-même prolongé par un alésage central de petit diamètre 4 débouchant dans un alésage étagé inférieur de plus grand diamètre 5. Les alésages 3 et 5 forment, comme on le verra plus avant, une première chambre et une deuxième chambre, séparées l'une de l'autre par une portion de corps formant une paroi interne ou cloison 6 traversée par le petit alésage 4. Dans l'alésage 3 débouche transversalement un alésage étagé 7 destiné à recevoir un raccord 8 de connection à une source de gaz sous pression, typiquement de l'air ou un mélange de gaz respiratoire sous pression. En regard de l'alésage transversal 7 est formé un alésage borgne 9 formant, dans le corps, une chambre décalée axialement de la chambre 5 et ouvrant normalement vers l'extérieur mais obturée par une membrane profilée 10 montée sur le corps 1 par une bague filetée 11. Selon un aspect de l'invention, la chambre constituée par l'alésage 9 communique en permanence avec la chambre formée par l'alésage 5 par une ouverture 12 formée dans la cloison 6.

Dans l'alésage 5 est monté un moyen de piston comprenant un piston 13 coulissant, à étanchéité grâce à un joint torique 14, dans l'extrémité inférieure évasée de l'alésage 5 et, pour éliminer tout risque de fuite au niveau du joint 14 solidaire d'une membrane souple annulaire 15 dont la périphérie est pincée entre l'extrémité inférieure du corps 1 et un bloc annulaire 16 rapporté sur l'extrémité inférieure du corps 1 et définissant une chambre intérieure 17 communiquant, par au moins par un passage 18, avec au moins un passage de sortie 19 formé dans une pièce annulaire 20 rapportée sur l'extrémité cylindrique inférieure de diamètre réduit du bloc 16, pour le raccordement à un circuit utilisateur moyenne pression, typiquement à un deuxième étage de détendeur d'un équipement de plongeur. Avec l'agencement selon l'invention, les chambres 9 et 5 sont remplies une fois pour toutes en usine, sans risque de contamination du fluide de remplissage par des composants extérieurs. Le piston 13 comporte une tige creuse 21 coulissant dans l'alésage central 4 et s'étendant dans l'alésage 3. L'étanchéité entre la tige 21 et la cloison centrale 6 est assurée par un joint 22 disposé dans une gorge annulaire de la cloison 6 raccordant les alésages 4 et 3 et maintenue par une bague 23 disposée dans l'alésage 3 autour de la tige 21.

Selon un aspect de l'invention, la chambre formée par l'alésage 3 est fermée, vers le haut, par un élément cylindrique formant siège de clapet 24, en matériau plastique semi-rigide, reçu dans un logement inférieur d'un élément obturateur 25 monté de façon étanche dans l'alésage taraudé d'extrémité 2 du corps 1. Dans la chambre haute pression formée par l'alésage 3 est disposé, autour de la tige 21, un ressort 26 prenant appui sur l'élément de siège 24 et sur la bague 23 de façon à maintenir celle-ci dans une position immobilisant le joint 22 dans sa gorge. La membrane 15 est solidarisée au piston 13 par une vis creuse centrale 27 de sorte que le canal central de la tige creuse 21 est en communication permanente avec la chambre inférieure moyenne pression 17 et avec la sortie 19. L'extrémité libre de la tige 21 est biseautée pour constituer un élément de clapet coopérant sélectivement avec le siège de clapet 24 et assurer ainsi, avec le piston 13, une fonction de détendeur de pression, la pression détendue étant déterminée par un ressort calibré 28 prenant appui sur la cloison 6 et sollicitant le piston 13 dans la direction opposée à celle de l'élément de clapet stationnaire 24. Pour adapter la pression détendue à la pression du milieu environnant, la face supérieure du piston 13 doit également être exposée à cette pression du milieu environnant. Cette fonction est assurée par un fluide incompressible, typiquement un bain d'huile de silicone 29 remplissant les chambres constituées par les alésages 5 et 9 et répercutant au piston 13 la pression environnante via la membrane 10 obturant l'alésage 9.

## Revendications

1. Régulateur de pression de gaz, comprenant, dans un corps (1), une première chambre (3) communiquant avec une entrée (7) connectable (8) à une source de gaz sous pression, une deuxième chambre (5) séparée de la première chambre (3) par une paroi (6) traversée par un passage (4) et fermée par un moyen de piston (13, 15) solidaire d'une tige creuse (21) coulissant de façon étanche dans le passage (4) et comportant une extrémité s'étendant dans la première chambre (3) et formant élément de clapet coopérant avec un siège de clapet (24) disposé dans la première chambre (3), le moyen de piston (13, 15) étant sollicité dans la direction opposée au siège de clapet (24) par un ressort (28) disposé dans la deuxième chambre (5) et prenant appui sur la paroi (6), une troisième chambre (17) séparée de la deuxième chambre par le moyen de piston (13, 15) et communiquant avec au moins une sortie (18) connectable (19) à un circuit utilisateur et avec la tige creuse (21), et une quatrième chambre (9) débouchant vers l'extérieur du corps (1), délimitée extérieurement par une paroi souple (10) et communiquant avec la deuxième chambre (5), les deuxième (5) et quatrième (9) chambres étant remplies d'un fluide sensiblement incompressible (29), caractérisé en ce que le siège de clapet (24) est porté par un élément obturateur (25) délimitant extérieurement la première chambre (3) et monté dans une extrémité (2) du corps (1), et en ce que la quatrième chambre (9) est formée dans une zone latérale du corps (1).

2. Régulateur selon la revendication 1, caractérisé en ce que la quatrième chambre (9) est formée sensiblement en regard de l'entrée de gaz sous pression (7).

3. Régulateur selon la revendication 2, caractérisé en ce que la quatrième chambre (9) communique avec la deuxième chambre (5) par une ouverture (12) dans la paroi (6).

4. Régulateur selon la revendication 3, caractérisé en ce que la paroi (6) est formée d'une seule pièce avec le corps (1).

5. Régulateur selon l'une des revendications précédentes, caractérisé en ce que la tige creuse (21) coopère avec un joint (22) maintenu dans la paroi (6) par une bague (23) sollicitée par un ressort (26) s'étendant dans la première chambre (3) et prenant appui sur le siège de clapet (24).

6. Régulateur selon la revendication 5, caractérisé en ce que le siège de clapet (24) est formé par un élément en matériau plastique reçu dans un évidement central de l'élément obturateur (25).

7. Régulateur selon l'une des revendications précédentes, caractérisé en ce que le moyen de piston comprend un piston (13) coulissant dans la deuxième chambre (5) et une membrane (15) délimitant intérieurement la troisième chambre (17).

8. Régulateur selon l'une des revendications précédentes, caractérisé en ce que le fluide (29) est une huile de silicone.

9. Régulateur selon l'une des revendications précédentes, caractérisé en ce que le gaz sous pression est un gaz respiratoire pour plongeurs.

## Patentansprüche

1. Gasdruckregler mit einem Körper (1) mit einer ersten Kammer (3), die mit einem mit einer Quelle für unter Druck stehendes Gas verbindbaren (8) Einlaß (7) in Verbindung steht, mit einer zweiten Kammer (5), die von der ersten Kammer (3) durch eine von einem Kanal (4) durchgriffene Wand (6) getrennt und mit einem Kolbenmittel (13, 15) abgeschlossen ist, welches mit einer Hohlstange (21) verbunden ist, die in dem Kanal (4) abgedichtet verschiebbar ist und ein Ende umfaßt, das sich in die erste Kammer (3) erstreckt und ein Ventilelement bildet, das mit einem in der ersten Kammer (3) angeordneten Ventilsitz (24) zusammenwirkt, wobei das Kolbenmittel (13, 15) mittels einer Feder (28) in der dem Ventilsitz (24) abgewandten Richtung vorgespannt ist, welche Feder in der zweiten Kammer (5) angeordnet ist und sich an der Wand (6) abstützt, mit einer dritten Kammer (17), die durch das Kolbenmittel (13, 15) von der zweiten Kammer (5) getrennt ist und mit mindestens einem mit einem Verbraucherkreis verbindbaren (19) Auslaß (18) und mit der Hohlstange (21) in Verbindung steht, und mit einer nach außen offenen vierten Kammer (9), die außen von einer biegsamen Wand (10) begrenzt ist und mit der zweiten Kammer (5) in Verbindung steht, wobei die zweite (5) und die vierte (9) Kammer mit einem nahezu nicht kompremierbaren Fluid (29) gefüllt sind, **dadurch gekennzeichnet,** daß der Ventilsitz (24) sich auf einem Verschlußelement (25) befindet, das die erste Kammer (3) außen begrenzt und in einem Ende (2) des Körpers (1) befestigt ist, und daß die vierte Kammer (9) in einem seitlichen Bereich des Körpers (1) ausgebildet ist.

2. Regler nach Anspruch 1, dadurch gekennzeichnet, daß die vierte Kammer (9) ungefähr gegenüber dem Einlaß für unter Druck stehendes Gas (7) ausgebildet ist.

3. Regler nach Anspruch 2, dadurch gekennzeichnet, daß die vierte Kammer (9) über eine Öffnung (12) in der Wand (6) mit der zweiten Kammer (5) in Verbindung steht.

4. Regler nach Anspruch 3, dadurch gekennzeichnet, daß die Wand (6) mit dem Körper (1) einstückig ist.

5. Regler nach einem der vorstehenden Ansprüche, dadurch gekennzeichnet, daß die Hohlstange (21) mit einer Dichtung (22) zusammenwirkt, die mittels eines Rings (23) in der Wand (6) gehalten ist, der mittels einer sich in die erste Kammer (3) erstreckenden und sich an dem Ventilsitz (24) abstützenden Feder (26) vorgespannt ist.

6. Regler nach Anspruch 5, dadurch gekennzeichnet, daß der Ventilsitz (24) aus einem Kunststoffteil besteht, das in einer zentralen Ausnehmung des Verschlußelements (25) aufgenommen ist.

7. Regler nach einem der vorstehenden Ansprüche, dadurch gekennzeichnet, daß das Kolbenmittel einen in der zweiten Kammer (5) verschiebbaren Kolben (13) und eine die dritte Kammer (17) innen begrenzende Membran (15) umfaßt.

8. Regler nach einem der vorstehenden Ansprüche, dadurch gekennzeichnet, daß das Fluid (29) ein Silikonöl ist.

9. Regler nach einem der vorstehenden Ansprüche, dadurch gekennzeichnet, daß das unter Druck stehende Gas ein Atemgas für Taucher ist.

## Claims

1. Gas pressure controller, comprising, in a body (1), a first chamber (3) communicating with an inlet (7) connectable (8) to a pressurized gas source, a second chamber (5) separated from the first chamber (3) by a wall (6) through which a passage (4) passes and which is closed by a piston means (13, 15) integral with a hollow rod (21) sliding in leak-tight manner in the passage (4) and comprising an end extending in the first chamber (3) and forming a valve element cooperating with a valve seat (24) arranged in the first chamber (3), the piston means (13, 15) being stressed in the direction opposite to the valve seat (24) by a spring (28) arranged in the second chamber (5) and resting on the wall (6), a third chamber (17) separated from the second chamber by the piston means (13, 15) and communicating with at least one outlet (18) connectable (19) to a user circuit and with the hollow rod (21), and a fourth chamber (9) emerging towards the exterior of the body (1), externally delimited by a flexible wail (10) and communicating with the second chamber (5), the second (5) and fourth (9) chambers being filled with a substantially incompressible fluid (29), characterized in that the valve seat (24) is carried by a shutter element (25) externally delimiting the first chamber (3) and mounted in an end (2) of the body (1), and in that the fourth chamber (9) is formed in a lateral zone of the body (1).

2. Controller according to Claim 1, characterized in that the fourth chamber (9) is formed substantially opposite the pressurized gas inlet (7).

3. Controller according to Claim 2, characterized in that the fourth chamber (9) communicates with the second chamber (S) by means of an opening (12) in the wall (6).

4. Controller according to Claim 3, characterized in that the wall (6) is formed in a single piece with the body (1).

5. Controller according to one of the preceding Claims, characterized in that the hollow rod (21) cooperates with a seal (22) retained in the wall (6) by a ring (23) stressed by a spring (26) extending in the first chamber (3) and resting on the valve seat (24).

6. Controller according to Claim 5, characterized in that the valve seat (24) is formed by an element of plastics material housed in a central recess of the shutter element (25).

7. Controller according to one of the preceding Claims, characterized in that the piston means comprises a piston (13) sliding in the second chamber (5) and a diaphragm (15) internally delimiting the third chamber (17).

8. Controller according to one of the preceding Claims, characterized in that the fluid (29) is a silicone oil.

9. Controller according to one of the preceding Claims, characterized in that the pressurized gas is a breathing gas for divers.
